# DEMANDE DE BREVET EUROPEEN

(11) **EP 4 391 359 A1**
(43) Date de publication de la demande: **26.06.2024**
(21) Numéro de dépôt: 23217371.6
(22) Date de dépôt: 15.12.2023
(51) Int. Cl.: H02S 20/00, H02S 40/22, B63B 35/44

(54) **INSTALLATION PHOTOVOLTAÏQUE FLOTTANTE**

(30) Priorité: 20.12.2022 FR 2213931
(71) Demandeur: Electricité de France, 75008 Paris (FR); Ciel et Terre International, 59262 Sainghin en Melantois (FR)
(72) Inventeur: BAYART, Gaëtan, 93360 NEUILLY-PLAISANCE (FR); LE BERRE, Rémi, 77250 MORET-LOING-ET-ORVANNE (FR); LE BLAN, Benjamin, 59650 VILLENEUVE D'ASCQ (FR)
(74) Mandataire: Plasseraud IP

(57) **Abrégé**

Des exemples présentent une installation photovoltaïque apte à flotter permettant la production d'électricité comprenant un premier module photovoltaïque, un deuxième module photovoltaïque, un réflecteur et un dispositif de flottaison apte à faire flotter l'installation photovoltaïque, dans laquelle :
- chaque module photovoltaïque comprend un panneau photovoltaïque et une structure porteuse, distincte du dispositif de flottaison et adaptée pour porter le panneau photovoltaïque ;
- les deux modules photovoltaïques sont orientés selon un même axe et sont alignés, selon cet axe, en étant séparés d'une distance déterminée, ladite distance étant adaptée pour permettre la circulation d'un individu entre les modules ; et
- le réflecteur comprend deux extrémités opposées respectivement assemblées à la structure porteuse du premier module photovoltaïque et à la structure porteuse du deuxième module photovoltaïque.

## Description

### Domaine technique

La présente divulgation concerne le domaine des installations photovoltaïques flottantes.

### Technique antérieure

Les installations photovoltaïques sont aujourd'hui largement utilisées pour la production d'électricité. Il existe notamment des installations photovoltaïques flottantes permettant de produire de l'électricité sur l'eau.

Les installations photovoltaïques flottantes peuvent notamment comprendre des éléments réflecteurs disposés au-dessus ou en surface de l'eau permettant de réfléchir le rayonnement solaire et en particulier les photons captés par les panneaux photovoltaïques des installations, dans le but d'augmenter la génération d'électricité de ces installations. Le rayonnement réfléchi par ces éléments réflecteurs n'est toutefois pas toujours optimal.

Par ailleurs, les opérations d'entretien et de maintenance des installations photovoltaïques flottantes ne sont pas nécessairement aisées pour les opérateurs une fois ces installations déployées sur l'eau.

La présente divulgation vient améliorer au moins en partie les situations mentionnées ci-dessus.

### Résumé

A cet égard, il est proposé une installation photovoltaïque apte à flotter permettant la production d'électricité comprenant un premier module photovoltaïque, un deuxième module photovoltaïque, un réflecteur et un dispositif de flottaison apte à faire flotter l'installation photovoltaïque, dans laquelle :
- chaque module photovoltaïque comprend un panneau photovoltaïque et une structure porteuse, distincte du dispositif de flottaison et adaptée pour porter le panneau photovoltaïque ;
- les deux modules photovoltaïques sont orientés selon un même axe et sont alignés, selon cet axe, en étant séparés d'une distance déterminée, ladite distance étant adaptée pour permettre la circulation d'un individu entre les modules ; et
- le réflecteur comprend deux extrémités opposées respectivement assemblées à la structure porteuse du premier module photovoltaïque et à la structure porteuse du deuxième module photovoltaïque.

Selon une option, le panneau photovoltaïque d'un module est un panneau photovoltaïque :
- monofacial qui comporte une face supérieure adaptée pour générer de l'électricité par effet photovoltaïque, ou
- bifacial qui comporte une face supérieure et une face inférieure adaptées pour générer de l'électricité par effet photovoltaïque.

Selon une option, le réflecteur est en outre adapté pour supporter le poids d'au moins une personne circulant sur le réflecteur entre les deux modules photovoltaïques.

Selon une option, le réflecteur est une bâche réfléchissante.

Selon une option, une extrémité du réflecteur assemblée à la structure porteuse d'un module photovoltaïque est disposée de sorte qu'une section du réflecteur s'étend sous le panneau photovoltaïque du module photovoltaïque sur au moins 10% de la longueur du panneau selon l'axe d'orientation.

Selon une option, la structure porteuse des modules photovoltaïques est adaptée pour surélever le panneau photovoltaïque par rapport au réflecteur.

Selon une option, les structures porteuses du premier et du deuxième modules photovoltaïques comprennent deux poutres porteuses s'étendant perpendiculairement à l'axe d'orientation des modules photovoltaïques ;
et une extrémité du réflecteur est assemblée à une poutre porteuse du premier module la plus proche du deuxième module et l'autre extrémité du réflecteur est assemblée à la poutre porteuse du deuxième module la plus proche du premier module.

Selon une option, une poutre porteuse d'un module photovoltaïque sur laquelle est assemblée une extrémité d'un réflecteur est disposée en retrait par rapport à un bord du panneau photovoltaïque s'étendant perpendiculairement à l'axe d'orientation du module, de sorte qu'une section du réflecteur s'étende sous le panneau photovoltaïque selon cet axe d'orientation.

Selon une option, la structure porteuse d'un module photovoltaïque comprend deux pieds et un support de panneau ;
chaque pied présentant une extrémité inférieure assemblée à une poutre porteuse respective et une extrémité supérieure assemblée au support de panneau ; et
le panneau photovoltaïque est assemblé sur le support de panneau.

Selon une option, le réflecteur est une bâche réfléchissante ;
une extrémité de la bâche réfléchissante comprend un jonc s'étirant sur la longueur de la bâche réfléchissante perpendiculaire à l'axe d'orientation des modules ; et
un profilé conformé selon une forme complémentaire à celle du jonc s'étend sur une poutre porteuse spécifique d'un module sur laquelle est assemblée une extrémité de la bâche réfléchissante de façon à ce que le jonc soit reçu dans le profilé et que l'extrémité de la bâche réfléchissante soit maintenue assemblée à la poutre porteuse spécifique.

Selon une option, le profilé est formé sur la poutre porteuse spécifique et constitue donc une partie intégrante de la poutre porteuse spécifique ; ou le profilé est assemblé à la poutre porteuse spécifique par un système de fixation.

Selon une option, le réflecteur est une bâche réfléchissante ;
une extrémité de la bâche réfléchissante comprend un jonc s'étirant sur la longueur de la bâche réfléchissante perpendiculaire à l'axe d'orientation des modules ; et
le jonc est assemblé à une poutre porteuse d'un module sur laquelle est assemblée une extrémité de la bâche réfléchissante par un système de tension adapté pour tendre la bâche réfléchissante.

Selon une option, l'installation photovoltaïque comprend deux rangées de modules photovoltaïques ;
- une première rangée de modules photovoltaïques comprend le premier module photovoltaïque et s'étend sensiblement perpendiculairement à l'axe d'orientation des premier et deuxième modules photovoltaïques ;
- une deuxième rangée de modules photovoltaïques comprend le deuxième module photovoltaïque et s'étend sensiblement perpendiculairement à l'axe d'orientation des premier et deuxième modules photovoltaïques ; et
les extrémités opposées du réflecteur étant assemblée de sorte que le réflecteur s'étend entre les deux rangées de modules photovoltaïques.

Selon une option, le réflecteur est configuré pour éviter un stockage de l'eau.

Les options d'installations photovoltaïques présentées par la présente divulgation permettent d'augmenter le productible photovoltaïque des installations selon l'art antérieur en disposant avec astuce les réflecteurs permettant de refléter le rayonnement solaire sur les panneaux photovoltaïques de l'installation entre deux modules alignés ou entre deux rangées de modules. Par ailleurs, dans certaines options, les caractéristiques de ces réflecteurs sont telles qu'ils sont adaptés pour supporter le poids d'une personne, permettant à ce titre d'utiliser ces réflecteurs comme chemin de circulation entre deux modules alignés et éventuellement entre deux rangées de modules, notamment pour permettre leur entretien et leur maintenance. Dans ces options, le réflecteur a donc une double fonction, sa fonction première qui est celle de réfléchir le rayonnement solaire pour permettre d'augmenter la génération de productible électrique par l'installation photovoltaïque et une deuxième fonction qui est celle de créer un chemin de circulation praticable pour permettre l'entretien et la maintenance de l'installation photovoltaïque par les opérateurs.

### Brève description des dessins

D'autres caractéristiques, détails et avantages apparaîtront à la lecture de la description détaillée ci-après, et à l'analyse des dessins annexés, sur lesquels :
[Fig. 1] représente schématiquement un premier exemple d'installation photovoltaïque.
[Fig. 2] représente un deuxième exemple d'installation photovoltaïque.
[Fig. 3] représente un troisième exemple d'installation photovoltaïque.
[Fig. 4a] représente un exemple de système d'assemblage d'une bâche réfléchissante sur une structure porteuse d'un module photovoltaïque.
[Fig. 4b] représente un autre exemple de système d'assemblage d'une bâche réfléchissante sur une structure porteuse d'un module photovoltaïque.
[Fig. 4c] représente encore un autre exemple de système d'assemblage d'une bâche réfléchissante sur une structure porteuse d'un module photovoltaïque.

### Description des modes de réalisation

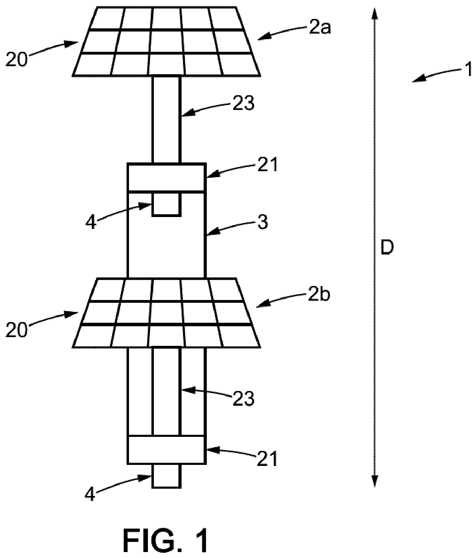

Il est maintenant décrit en référence aux figures 1 à 3 une installation photovoltaïque 1 apte à flotter sur une surface aquatique. Cette surface peut par exemple être un lac, naturel ou artificiel, un étang, ou encore la surface de la mer, de préférence dans un endroit faiblement exposé aux vagues et aux courants, par exemple un port, une crique, un lagon, etc. L'installation photovoltaïque 1 de la présente divulgation permet de faciliter les opérations d'entretien et de maintenance des opérateurs sur l'installation tout en améliorant l'efficacité de production électrique des installations photovoltaïques flottantes connues.

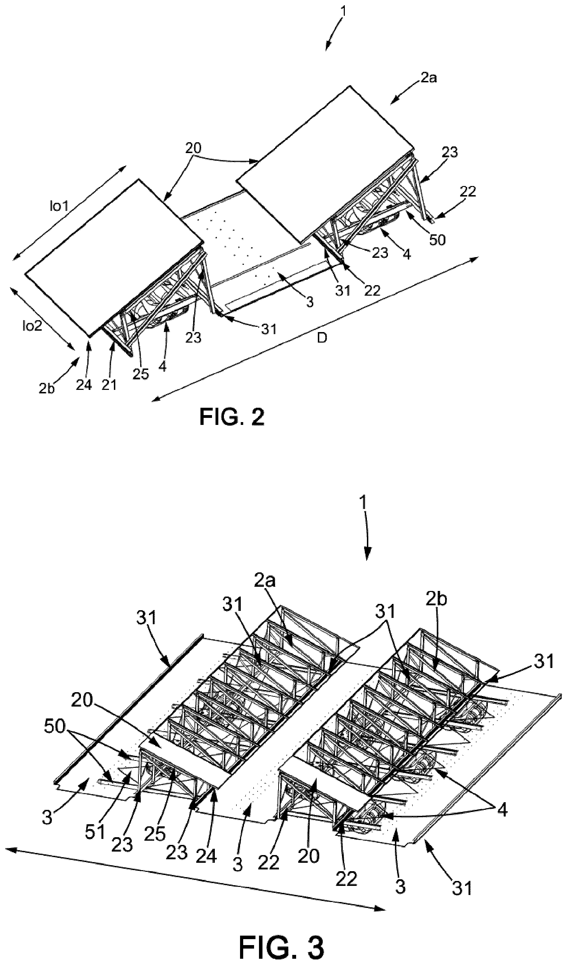

L'installation photovoltaïque 1 comprend au moins deux modules photovoltaïques 2, un réflecteur 3 et un dispositif de flottaison 4 apte à faire flotter l'installation photovoltaïque 1 sur une surface aquatique. Un premier module photovoltaïque est référencé 2a et un deuxième module photovoltaïque est référencé 2b sur les figures 1 à 3. La figure 3 représente un exemple d'installation photovoltaïque 1 comprenant deux rangées de modules photovoltaïques dans laquelle une première rangée de modules photovoltaïques comprend le premier module photovoltaïque 2a et une deuxième rangée de modules photovoltaïques comprend le deuxième module photovoltaïque 2b.

Les modules photovoltaïques 2 peuvent être des modules photovoltaïques présentant un panneau photovoltaïque 20 monofacial ou un panneau photovoltaïque 20 bifacial.

Un panneau photovoltaïque monofacial désigne un panneau photovoltaïque comportant une face supérieure adaptée pour générer de l'électricité par effet photovoltaïque et une face inférieure. La face supérieure d'un panneau photovoltaïque monofacial est ainsi équipée de cellules photovoltaïques adaptées pour convertir des photons en énergie électrique par effet photovoltaïque. La face inférieure est quant à elle dépourvue de cellules photovoltaïques. La face supérieure du panneau photovoltaïque correspond à la face du panneau destinée à être orientée vers le ciel. La face supérieure du panneau est donc destinée à recevoir un rayonnement solaire direct.

Un panneau photovoltaïque bifacial 20 désigne un panneau photovoltaïque comportant une face supérieure et une face inférieure adaptées pour générer de l'électricité par effet photovoltaïque. En d'autres termes, la face supérieure et la face inférieure d'un panneau photovoltaïque bifacial 20 sont équipées de cellules photovoltaïques adaptées pour convertir des photons en énergie électrique par effet photovoltaïque. La face supérieure du panneau photovoltaïque bifacial 20 correspond à la face du panneau destinée à être orientée vers le ciel et donc destinée à recevoir un rayonnement solaire direct. La face inférieure du panneau photovoltaïque bifacial correspond à la face du panneau destinée à être orientée vers la surface aquatique et donc destinée à recevoir un rayonnement solaire réfléchi, par exemple réfléchi par le réflecteur 3.

Un panneau photovoltaïque 20 peut notamment comprendre un cadre 24 solidarisant la face supérieure et la face inférieure du panneau et formant les bords latéraux du panneau photovoltaïque 20.

Le panneau photovoltaïque 20 d'un module photovoltaïque 2 peut être monopente ou bipente comme cela est bien connu de l'Homme du Métier.

Un module photovoltaïque 2 comprend une structure porteuse 21 adaptée pour porter un panneau photovoltaïque 20. La structure porteuse 21 peut par exemple être réalisée en un alliage métallique ou en un matériau composite. La structure porteuse 21 d'un module photovoltaïque est distincte du dispositif de flottaison 4 au sens où elle ne permet pas, à elle seule, de faire flotter le module photovoltaïque. La structure porteuse peut également être adaptée pour surélever le panneau photovoltaïque 20 par rapport au réflecteur 3. La structure porteuse 21 d'un module photovoltaïque peut notamment être assemblée au cadre 24 du panneau photovoltaïque 20.

Dans des exemples, le dispositif de flottaison 4 peut comprendre un élément de flottaison 4 mécaniquement connecté à la structure porteuse 21 d'un module photovoltaïque 2 et permettant de faire flotter ce module. Dans d'autres exemples et notamment ceux représentés sur les figures 2 et 3, le dispositif de flottaison 4 est connecté à la structure porteuse 21 des modules par une structure intermédiaire qui sera détaillée ci-après. Un élément de flottaison peut par exemple comprendre une armature creuse et des moyens de fixation pour être assemblé à la structure porteuse 21 d'un module photovoltaïque ou pour être assemblé à la structure intermédiaire de l'installation photovoltaïque. Dans des exemples, un élément de flottaison peut notamment comprendre un boudin de flottaison.

Comme représenté sur les figures 1 à 3, dans l'installation photovoltaïque 1 de la présente divulgation, les deux modules photovoltaïques 2 sont adaptés pour être sensiblement orientés selon un même axe lorsque l'installation photovoltaïque est déployée. L'axe d'orientation des modules est référencé par la flèche D sur les figures.

L'orientation selon un axe des deux modules photovoltaïques 2 désigne ici le fait que les plans tangents aux surfaces correspondantes des panneaux photovoltaïques 20 des deux modules sont sensiblement parallèles lorsque l'installation photovoltaïque 1 est déployée.

Dans des exemples dans lesquels les panneaux photovoltaïques 20 des modules photovoltaïques 2 sont monopentes, l'axe selon lequel les panneaux photovoltaïques 20 des deux modules sont orientés lorsque l'installation est déployée peut correspondre à un axe nord-sud, les panneaux étant inclinés de sorte que la face supérieure soit dirigée vers le sud.

Dans d'autres exemples dans lesquels les panneaux photovoltaïques 20 des modules photovoltaïques 2 sont bipentes, l'axe selon lequel les panneaux photovoltaïques 20 des deux modules sont orientés lorsque l'installation est déployée peut correspondre à une direction est-ouest, une portion de la face supérieure des panneaux correspondant à une pente étant orientée vers l'est et l'autre portion correspondant à l'autre pente étant orientée l'ouest.

Il peut ainsi être défini une première longueur lo1 des modules photovoltaïques 2 correspondant à l'étalement des modules photovoltaïques 2 selon l'axe d'orientation et une deuxième longueur lo2 des modules photovoltaïques correspondant à l'étalement des modules selon une direction perpendiculaire à l'axe d'orientation des modules, comme représenté sur la figure 2.

Par ailleurs, et comme représenté sur les figures 1 à 3, dans l'installation photovoltaïque 1 de la présente divulgation, les deux modules photovoltaïques 2a et 2b sont également adaptés pour être sensiblement alignés lorsque l'installation photovoltaïque 1 est déployée. Les deux modules photovoltaïques 2a et 2b forment donc une ligne de deux modules photovoltaïques 2.

Le fait que deux modules photovoltaïques soient sensiblement alignés lorsque l'installation photovoltaïque 1 est déployée signifie que les bords latéraux correspondants de leur panneau photovoltaïque respectif qui s'étendent parallèlement à l'axe d'orientation des modules sont alignés.

Les deux modules photovoltaïques 2a et 2b sont également séparés d'une distance déterminée selon l'axe d'orientation des modules. Cette distance est adaptée pour permettre la circulation d'un individu. La distance déterminée peut par exemple être supérieure à 50cm, supérieure à 1m ou supérieure à 2m.

Dans des exemples dans lesquels l'installation est destinée à être déployée en Europe, la distance déterminée peut par exemple être comprise entre 2 et 3m, avantageusement entre 2 et 2.4m.

Dans d'autres exemples dans lesquels l'installation est destinée à être déployée au Moyen-Orient ou en Afrique du Nord, la distance déterminée peut par exemple être comprise entre 1 et 2m, idéalement entre 1.3 et 1.7m.

En ce qui concerne le réflecteur 3 de l'installation photovoltaïque 1, il comprend deux extrémités 31 opposées respectivement assemblées à la structure porteuse 21 du premier module photovoltaïque 2a et à la structure porteuse 22 du deuxième module photovoltaïque 2b. En d'autres termes, le réflecteur 3 est accroché par une première extrémité 31 à la structure porteuse du premier module 2a et est accroché par une deuxième extrémité 31, opposée à la première extrémité 31, à la structure porteuse du deuxième module 2b de sorte que le réflecteur 3 s'étend entre les modules photovoltaïques. Le réflecteur comprend ainsi une surface supérieure orientée vers le ciel et une surface inférieure orientée vers la surface aquatique.

Les inventeurs ont astucieusement remarqué que le rayonnement solaire reçu au niveau d'un réflecteur est supérieur dans le cas où le réflecteur s'étend entre deux modules photovoltaïques comme présenté par la présente divulgation que dans un autre cas où le réflecteur est positionné sous le module photovoltaïque, comme proposé par l'art antérieur. En effet, dans ce cas, le module photovoltaïque en lui-même, en particulier le panneau photovoltaïque, apporte de l'ombrage au réflecteur 3 de sorte que le rayonnement qu'il reçoit est atténué. Au contraire, lorsque le réflecteur 3 s'étend entre les deux modules, les modules ne créent pas ou peu d'ombrage sur le réflecteur, de sorte que le rayonnement reçu par le réflecteur est important. En particulier, le rayonnement reçu par le réflecteur est réfléchi par ledit réflecteur afin d'augmenter la quantité de photons captés par les panneaux photovoltaïques 20 des modules. Par conséquent, augmenter le rayonnement reçu par le réflecteur 3 permet d'augmenter son rayonnement réfléchi et permet donc, *in fine*, d'augmenter la quantité de photons captés par les panneaux photovoltaïques 20 des modules photovoltaïques 2, améliorant de ce fait leur capacité de production électrique.

On comprend par ailleurs que l'exemple de réalisation de l'installation photovoltaïque 1 décrit ci-dessus comprend seulement deux modules photovoltaïques alignés et orientés selon un même axe d'orientation mais que l'installation photovoltaïque 1 pourrait présenter plus de deux modules photovoltaïques alignés et plusieurs réflecteurs 3 s'étendant chacun entre deux modules photovoltaïques adjacents de l'alignement. Dans cette mesure, les caractéristiques des modules et du réflecteur 3 présentées dans la présente divulgation peuvent s'appliquer à chaque module 2 et à chaque réflecteur 3 des exemples d'installations photovoltaïques décrits dans le présent exposé, notamment aux modules des rangées de modules photovoltaïques illustrées en figure 3.

Ainsi, dans des exemples, une première extrémité 31 d'un réflecteur 3 peut être assemblée à une première extrémité 31 de la structure porteuse 21 d'un module photovoltaïque 2 d'extrémité d'une ligne de modules photovoltaïques 2, et peut s'étendre dans une direction opposée aux autres modules de la ligne de modules photovoltaïques. Dans cette configuration, la deuxième extrémité 31 du réflecteur 3 n'est pas assemblée à un autre module, mais est agencée pour s'étendre au-dessus de la surface aquatique, éventuellement reposer sur cette surface aquatique. On comprend que dans une installation photovoltaïque 1 comprenant deux modules photovoltaïques, chacun des deux modules correspond à un module d'extrémité de la ligne de sorte qu'un réflecteur 3 peut s'étendre depuis chacun d'eux dans une direction opposée à l'autre module. Cet exemple est représenté pour deux rangées de module en figure 3 dans laquelle deux réflecteurs 3 s'étendent respectivement depuis une rangée de modules photovoltaïques dans une direction opposée à l'autre rangée de modules. Le fait que le réflecteur s'étende depuis la structure porteuse 21 d'un module d'extrémité de la ligne sur la surface aquatique permet d'augmenter la génération d'électricité du panneau photovoltaïque 20 de module d'extrémité. Dans des exemples particuliers dans lesquels les modules photovoltaïques 2 de la ligne de modules photovoltaïques 2 sont monopentes, comme illustré sur la figure 1, le réflecteur 3 s'étend avantageusement depuis la structure porteuse 21 du dernier module photovoltaïque 2 disposée à l'extrémité de la ligne opposée à la direction dans laquelle sont orientées les panneaux photovoltaïques des modules monopentes. Dans le cadre de la figure 1, il s'agirait donc d'un réflecteur 3 s'étendant depuis la structure porteuse 21 du module 2a, à l'opposé du module 2b, sur la surface aquatique.

Dans des exemples, le réflecteur 3 correspond à une bâche réfléchissante. Par exemple, la bâche réfléchissante peut être de couleur blanche. Elle peut être tissée avec du fil blanc ou peinte en blanc ; ou encore être réalisée en un matériau hautement réfléchissant. Lorsque l'installation est déployée, la bâche réfléchissante est tendue entre les modules photovoltaïques pour assurer une bonne réflexion du rayonnement solaire.

Dans des exemples, le réflecteur 3 est en outre adapté pour supporter le poids d'au moins une personne circulant sur le réflecteur entre les deux modules photovoltaïques. Dans la mesure où le réflecteur 3 s'étend entre deux modules, il peut être utilisé comme chemin de circulation entre les modules pour un ou plusieurs opérateurs. Par conséquent, dans ces exemples, le réflecteur 3 selon la présente divulgation permet également aux opérateurs d'accéder facilement aux modules photovoltaïques lorsque l'installation est déployée. L'entretien et la maintenance des modules, en particulier des panneaux photovoltaïques 20, sont donc facilités. En d'autres termes, dans ces exemples, la disposition du réflecteur 3 augmente l'efficacité de production de l'installation photovoltaïque 1 tout en facilitant son entretien et sa maintenance. Dans des exemples, le réflecteur 3 est par exemple adapté pour supporter un poids supérieur à 40kg. Dans des exemples, le réflecteur est par exemple adapté pour supporter un poids compris entre 40kg et 1000kg, et de préférence adapté pour supporter un poids compris entre 40kg et 180kg. Ceci peut être obtenu en utilisant pour former le réflecteur une bâche formée dans un matériau adaptée et/ou obtenue par un tissage suffisamment serré. A titre d'exemple non limitatif, une toile maillée de type trampoline de catamaran peut être utilisée, en sélectionnant un maillage serré pour obtenir un coefficient de réflexion satisfaisant.

Dans des exemples, et comme illustré sur les figures 2 et 3, une extrémité 31 du réflecteur 3 assemblée à la structure porteuse 21 d'un module photovoltaïque 2 est disposée de sorte qu'une section du réflecteur 3 s'étende sous le panneau photovoltaïque 20 du module photovoltaïque 2 sur au moins 10% de la longueur du panneau photovoltaïque 20 selon l'axe d'orientation du module. De préférence, l'extrémité 31 du réflecteur assemblée à la structure porteuse 21 d'un module photovoltaïque 2 est disposée de sorte qu'une section du réflecteur 3 s'étende sous le panneau photovoltaïque 20 du module photovoltaïque 2 sur une plage comprise entre 10 et 40% de la longueur du panneau photovoltaïque 20 selon l'axe d'orientation du module. Cette section du réflecteur 3 disposée à proximité du bord du panneau photovoltaïque 20 sur sa longueur, bien que située sous le panneau photovoltaïque 20, reçoit tout de même un rayonnement solaire non négligeable, au contraire d'une section du réflecteur disposée sous le centre du panneau photovoltaïque 20 complètement ombragée. Cette section peut donc réfléchir le rayonnement solaire qu'elle reçoit de façon à augmenter le productible photovoltaïque d'un module 2 de l'installation photovoltaïque 1. On comprend que ce mode de réalisation est particulièrement avantageux pour les modules présentant des panneaux photovoltaïques bifaciaux 20 puisque le rayonnement réfléchi peut être capté en converti en électricité par la face inférieure du panneau photovoltaïque 20.

Dans des exemples préférentiels, une extrémité 31 du réflecteur assemblée à la structure porteuse du premier module photovoltaïque 2a est disposée de sorte qu'une première section du réflecteur s'étend sous le panneau photovoltaïque du premier module photovoltaïque 2a sur au moins 1 0% de la longueur du panneau selon l'axe d'orientation; et l'autre extrémité 31 du réflecteur assemblée à la structure porteuse du deuxième module photovoltaïque 2b est disposée de sorte qu'une deuxième section du réflecteur, opposée à la première section, s'étend sous le panneau photovoltaïque du deuxième module photovoltaïque 2b sur au moins 1 0% de la longueur du panneau selon l'axe d'orientation . Par conséquent, dans ces exemples, une section du réflecteur 3 s'étend sous le panneau photovoltaïque 20 des deux modules de façon à augmenter le productible photovoltaïque des deux modules de l'installation photovoltaïque 1.

Dans les exemples précédemment décrits comprenant une section du réflecteur 3 s'étendant sous le panneau photovoltaïque du ou des modules, il ne s'agit pas de faire s'étendre le réflecteur 3 sur toute la longueur du panneau photovoltaïque 20 d'un module 2 puisqu'une section du réflecteur 3 située sous le centre du panneau photovoltaïque 20 serait presque complètement ombragée par le panneau et ne bénéficierait donc de presque aucun rayonnement solaire, faisant augmenter le coût du réflecteur 3 pour des gains de productibles nuis ou quasi nuis. Au contraire, les exemples précédemment décrits proposent de faire s'étendre une section définie du réflecteur sous les panneaux photovoltaïques 20 des modules 2 en assurant un bon compromis entre le coût du réflecteur et le rayonnement solaire reçu et réfléchi par le réflecteur 3. Par ailleurs, le fait qu'une section sous le panneau photovoltaïque ne présente pas de réflecteur permet également d'assurer un meilleur refroidissement du panneau photovoltaïque par la surface aquatique lors de son utilisation.

Dans des exemples, le réflecteur 3 est configuré pour éviter un stockage de l'eau, notamment sur sa surface supérieure. Le réflecteur 3 peut par exemple être configuré pour écouler l'eau de sa surface supérieure à la surface aquatique. Dans des premiers exemples, les extrémités du réflecteur 3 sont assemblées sur les structures porteuses des modules 2 de sorte que le réflecteur est incliné d'un angle déterminé par rapport à un axe horizontal pour que l'eau qui se trouverait sur sa surface supérieure puisse s'écouler vers la surface aquatique. L'angle déterminé peut par exemple être compris entre 0.001° et 10° et peut avantageusement être compris entre 0.5° et 5°. Dans des deuxièmes exemples, le réflecteur comprend une pluralité de trous d'écoulement permettant à l'eau qui se trouve sur sa surface supérieure de s'écouler vers la surface aquatique. Il est également envisagé de combiner les deux exemples décrits ci-dessus, c'est-à-dire d'assembler les extrémités du réflecteur 3 sur les structures porteuses des modules pour que le réflecteur soit incliné et de prévoir des trous d'écoulement sur le réflecteur 3. En effet, de l'eau stagnant sur le réflecteur entraine une diminution de son caractère réflectif dans la mesure où l'albédo de l'eau est inférieur à celle du réflecteur. L'écoulement de l'eau aura aussi pour effet d'entraîner et d'évacuer de la salissure qui se serait accumulée sur le réflecteur.

Dans des exemples, la structure porteuse 21 d'un module photovoltaïque 2 est adaptée pour surélever le panneau photovoltaïque 20 par rapport au réflecteur 3, et en particulier par rapport à une extrémité du réflecteur assemblée sur cette structure porteuse 21. La structure porteuse 21 d'un module photovoltaïque 2 de l'installation photovoltaïque 1 peut ainsi comprendre, comme illustré sur les figures 1 à 3 au moins un pied 23. Une extrémité 31 du réflecteur 3 pourrait ainsi être assemblée à un pied du module photovoltaïque. Le pied 23 peut par exemple être vertical, comme représenté sur les figures. Le pied 23 supporte au moins en partie le panneau photovoltaïque 20 du module photovoltaïque 2 de sorte que le panneau photovoltaïque 20 est surélevé par rapport au réflecteur 3.

Dans des premiers exemples, une extrémité supérieure du pied 23 de la structure porteuse 21 d'un module photovoltaïque 2 peut être directement assemblée au panneau photovoltaïque 20, par exemple au cadre 24 portant le panneau photovoltaïque 20.

Dans des deuxièmes exemples, la structure porteuse 21 d'un module photovoltaïque 20 peut également comprendre un support de panneau 25 assemblé à une extrémité supérieure d'au moins un pied 23 de la structure porteuse 21. Dans ces deuxièmes exemples, le panneau photovoltaïque 20 peut être assemblé sur le support de panneau 25, notamment le cadre 24 du panneau photovoltaïque 20 peut être assemblé sur le support de panneau 25, comme représenté sur les figures 2 et 3.

Dans les exemples représentés en figures 2 et 3, le support de panneau 25 assemblé à l'extrémité supérieure d'un pied 23 de la structure porteuse 21 comprend une première barre oblique s'étendant parallèlement à l'axe d'orientation du module photovoltaïque 2. Dans l'exemple représenté, la barre oblique s'étend depuis l'extrémité de deux pieds 23 du module 2 alignés selon l'axe d'orientation des panneaux et est assemblé au cadre du panneau 24. La barre oblique présente donc avantageusement l'inclinaison souhaitée pour le panneau 20 par rapport à un axe horizontal. Dans d'autres exemples non représentés, le support de panneau 25 assemblé à l'extrémité supérieure d'un pied 23 peut comprendre une barre horizontale s'étendant perpendiculairement à l'axe d'orientation du module photovoltaïque 2, par exemple entre deux pieds 23 du module 2 alignés perpendiculairement à l'axe d'orientation. Dans des derniers exemples, le support de panneau 25 peut comprendre à la fois la barre oblique s'étendant depuis l'extrémité de deux pieds 23 du module 2 alignés selon l'axe d'orientation des panneaux et la barre horizontale s'étendant depuis l'extrémité de deux pieds 23 du module 2 alignés perpendiculairement à l'axe d'orientation des panneaux.

Le fait de surélever le panneau photovoltaïque 20 par rapport au réflecteur 3 permet de réduire l'ombre du panneau photovoltaïque 20 sur le réflecteur 3, et en particulier sur la section du réflecteur 3 s'étendant éventuellement sous le panneau photovoltaïque 20. Par conséquent, le fait de surélever les panneaux photovoltaïques 20 par rapport au réflecteur permet d'augmenter l'efficacité de leur production d'électricité. Dans des exemples, le pied 23 présente une longueur adaptée pour que le point le plus bas du panneau photovoltaïque 20 soit disposé à au moins 30cm de hauteur par rapport au réflecteur, avantageusement à au moins 50cm de hauteur par rapport au réflecteur 3.

Dans des exemples et notamment ceux illustrés en figures 2 et 3, les structures porteuses 21 du premier 2a et du deuxième 2b modules photovoltaïques comprennent deux poutres porteuses 22 s'étendant perpendiculairement à l'axe d'orientation des modules photovoltaïques. Dans ces exemples, une extrémité du réflecteur 3 est assemblée à une poutre porteuse 22 du premier module 2a la plus proche du deuxième module 2b et l'autre extrémité du réflecteur 3 est assemblée à la poutre porteuse 22 du deuxième module 2b la plus proche du premier module 2a. Cette structure porteuse 21 d'un module 2 comprenant les deux poutres porteuses 22 avec une extrémité du réflecteur 3 assemblée à une poutre porteuse permet de définir l'étalement du réflecteur 3 le long de l'axe d'orientation des modules et notamment de définir si, et éventuellement dans quelle mesure, le réflecteur s'étend sous le panneau photovoltaïque 20 du module. En l'occurrence, en rapprochant la poutre porteuse 22 sur laquelle une extrémité du réflecteur 3 est assemblée du centre du module photovoltaïque 2, le réflecteur 3 peut donc déborder sous le panneau photovoltaïque 20 du module 2. En d'autres termes, dans des exemples, une poutre porteuse 22 du module photovoltaïque 2 sur laquelle est assemblée une extrémité d'un réflecteur 3 peut être disposée en retrait par rapport à un bord du panneau photovoltaïque 20 s'étendant perpendiculairement à l'axe d'orientation du module, de sorte qu'une section du réflecteur 3 s'étende sous le panneau photovoltaïque 20 selon cet axe. Dans ces exemples, la poutre porteuse peut être disposée en retrait par rapport à un bord du panneau photovoltaïque 20 s'étendant perpendiculairement à l'axe d'orientation du module, de sorte qu'une section du réflecteur 3 s'étende sous le panneau photovoltaïque 20 du module photovoltaïque 2 sur au moins 10%, avantageusement entre 10 et 40%, de la longueur du panneau photovoltaïque 20 selon cet axe d'orientation.

Dans des exemples complémentaires dans lesquels les structures porteuses 21 des modules 2 comprennent les deux poutres porteuses 22, la structure porteuse 21 d'un module photovoltaïque 2 peut en outre comprendre deux pieds 23. Chaque pied 23 d'un module photovoltaïque présente une extrémité inférieure assemblée à une poutre porteuse respective du module photovoltaïque et une extrémité supérieure assemblée au cadre 24 du panneau photovoltaïque 20, ou au support de panneau 25 supportant le panneau photovoltaïque 20 le cas échéant. Cette configuration de structure porteuse est simple dans la mesure où elle permet d'assembler le réflecteur 3 et de monter les pieds 23 permettant de surélever le panneau 20 par rapport au réflecteur 3 sur un même élément mécanique, réduisant ainsi le coût de l'installation photovoltaïque 1 et facilitant son montage. Ces exemples sont notamment représentés sur les figures 2 et 3.

Dans des exemples, un pied 23 assemblé à une extrémité inférieure sur une poutre porteuse 22 et assemblé à une extrémité supérieure au panneau photovoltaïque 20, ou au support de panneau 25 le cas échant, peut s'étendre de manière sensiblement verticale afin de rigidifier la structure porteuse 21. Dans d'autres exemples, un pied 23 assemblé à une extrémité inférieure sur une poutre porteuse 22 et assemblé à une extrémité supérieure au panneau photovoltaïque 20, ou au support de panneau 25 le cas échant, peut s'étendre selon un angle déterminé par rapport à un axe vertical dans une direction opposée à la poutre porteuse adjacente de celle sur laquelle il est assemblé. Dans ces autres exemples, la poutre porteuse 22 du module 2 assemblée à une extrémité 31 d'un réflecteur 3 peut être disposée davantage vers le centre du module photovoltaïque selon l'axe d'orientation du module tout en supportant solidement le panneau ou en supportant solidement le support de panneau 25 supportant lui-même le panneau 20. Par conséquent, un réflecteur 3 dont une extrémité 31 s'étendrait depuis une telle poutre porteuse 22 peut s'étendre davantage sous le panneau photovoltaïque 20.

Par ailleurs, en choisissant la longueur des deux pieds 23 montés sur les poutres porteuses 22, l'Homme du Métier peut définir à la fois l'élévation du panneau photovoltaïque 20 par rapport au réflecteur 3 et son inclinaison par rapport à un axe horizontal tout en garantissant un montage solide du panneau photovoltaïque sur la structure porteuse 21 du module 2. En effet, en choisissant un pied 23 plus court que l'autre, le panneau photovoltaïque 20 est incliné par rapport à l'axe horizontal.

Dans des exemples dans lesquels les modules 2a et 2b comprennent un panneau photovoltaïque monopente biface et que l'installation photovoltaïque est destinée à être déployée en Europe, l'inclinaison du panneau photovoltaïque 20 des modules par rapport à un axe horizontal est comprise entre 23 et 27°. Cette inclinaison permet une génération électrique de l'installation photovoltaïque efficace pour cette zone géographique.

Dans d'autres exemples dans lesquels les modules 2a et 2b comprennent un panneau photovoltaïque monopente biface et que l'installation photovoltaïque est destinée à être déployée au Moyen-Orient ou en Afrique du Nord, l'inclinaison du panneau photovoltaïque 20 des modules par rapport à un axe horizontal est comprise entre 18 et 22°. Cette inclinaison permet une génération électrique de l'installation photovoltaïque efficace pour ces zones géographiques.

Dans d'autres exemples dans lesquels les modules 2a et 2b comprennent un panneau photovoltaïque bipente biface, l'inclinaison des pentes du panneau photovoltaïque 20 des modules par rapport à un axe horizontal est comprise entre 8 et 12°. Cette inclinaison permet une génération électrique de l'installation photovoltaïque efficace lorsque l'axe d'orientation des modules une fois l'installation déployée correspond à un axe est-ouest.

Dans d'autres exemples dans lesquels les modules 2a et 2b comprennent un panneau photovoltaïque monoface, l'inclinaison d'une pente du panneau photovoltaïque 20 des modules par rapport à un axe horizontal est supérieure à 30°. Ces exemples peuvent s'appliquer qu'il s'agisse d'un panneau photovoltaïque monopente ou bipente, Cette inclinaison, plus importante que pour un panneau photovoltaïque biface, permet d'augmenter le productible de l'installation photovoltaïque 1 puisque la réflexion du rayonnement solaire sur le réflecteur 3 est davantage captée par la face supérieure du panneau photovoltaïque génératrice d'électricité.

Dans des exemples, l'installation photovoltaïque 1 peut comprendre une structure intermédiaire. La structure intermédiaire est assemblée au dispositif de flottaison 4 et est assemblée aux structures porteuses 21 des modules photovoltaïques d'une ligne de modules photovoltaïques 2. La structure intermédiaire s'étend donc selon l'axe d'orientation des modules alignés. Elle est agencée pour assurer l'alignement des modules 2 selon l'axe d'orientation et pour connecter le dispositif de flottaison 4 aux structures porteuses 21 des modules 2 alignés de façon à permettre la flottaison de la ligne de modules photovoltaïques. La structure intermédiaire permet également de conserver une distance déterminée constante entre les modules, et ce malgré le mouvement de la surface aquatique. La structure intermédiaire est avantageusement assemblée sous la structure porteuse 21 des modules alignés de façon à faciliter le déploiement du réflecteur et de façon à éviter de faire de l'ombrage au réflecteur.

Dans des exemples, la structure intermédiaire d'une ligne de modules photovoltaïques peut par exemple comprendre deux longerons 50 s'étendant parallèlement l'un à l'autre selon l'axe d'orientation des modules de la ligne comme représenté sur la figure 3. Les longerons 50 assurent donc l'alignement des modules de la ligne en évitant un déplacement relatif des modules d'une même ligne les uns par rapport aux autres. Dans ces exemples, et comme illustré sur les figures 1 et 2, les longerons 50 sont assemblés sur les éléments de flottaison 4 de façon à permettre à la ligne de modules de flotter. La structure intermédiaire peut également comprendre un contreventement 51 assemblé entre les longerons de façon à maintenir les longerons 50 parallèles l'un à l'autre. Le contreventement 51 peut par exemple former une ou plusieurs croix entre les longerons 50 comme représenté par la figure 3. Par ailleurs, dans des exemples où la structure porteuse 21 des modules photovoltaïques 2 de la ligne de modules photovoltaïques comprend les poutres porteuses 22, les poutres porteuses 22 peuvent être assemblées sur les longerons 50, perpendiculairement à l'axe d'orientation des modules, comme représenté sur les figures 2 et 3. De cette façon, le contreventement est disposé à une élévation inférieure à celle du réflecteur 3 pour ne pas provoquer d'ombrage sur le réflecteur 3, lequel ombrage pourrait diminuer le rayonnement reçu par le réflecteur.

Dans des exemples de réalisation préférés illustrés sur la figure 3, l'installation photovoltaïque 1 peut comprendre deux rangées de modules photovoltaïques 2. Une première rangée de modules photovoltaïques comprend le premier module photovoltaïque 2a. Une deuxième rangée de modules photovoltaïques comprend le deuxième module photovoltaïque 2b et fait face à la première rangée. Les rangées de modules photovoltaïques, comme représentés sur la figure 3, s'étendent sensiblement perpendiculairement à l'axe d'orientation des premier et deuxième modules photovoltaïques. Les rangées de modules photovoltaïques 2 s'étendent donc sensiblement parallèlement l'une à l'autre, perpendiculairement aux lignes de modules photovoltaïques. En l'occurrence, les rangées de modules photovoltaïques peuvent correspondre à une pluralité de lignes de modules photovoltaïques, collées les unes aux autres.

Dans des exemples dans lesquels l'installation photovoltaïque 1 comprend les deux rangées de modules, le réflecteur 3 s'étend entre les rangées de modules photovoltaïques, comme représenté sur la figure 3.

Par conséquent, dans ces exemples de réalisation, un réflecteur 3 forme un chemin de circulation entre deux rangées de modules adjacentes en plus de réfléchir le rayonnement solaire. Comme expliqué précédemment, cela facilite les opérations d'entretien et de maintenance des rangées de modules photovoltaïques pour les opérateurs qui peuvent circuler sur le réflecteur.

On comprend par ailleurs que l'exemple de réalisation de la figure 3 est présenté pour deux rangées de modules photovoltaïques puisqu'il s'agit d'un mode de réalisation étendu de l'installation photovoltaïque 1 comprenant le premier 2a et le deuxième 2b modules photovoltaïques. Toutefois, l'installation photovoltaïque 1 pourrait présenter plus de deux rangées de modules photovoltaïques parallèles et plusieurs réflecteurs 3 s'étendant chacun entre deux rangées de modules photovoltaïques adjacentes.

Dans les exemples comprenant deux rangées de modules photovoltaïques 2, les structures porteuses 21 du premier 2a et du deuxième module 2b photovoltaïque peuvent être en partie partagées avec les autres modules photovoltaïques de leur rangée respective.

Notamment, dans des exemples où la structure porteuse 21 d'un module photovoltaïque comprend les poutres porteuses 22, ces poutres porteuses 22 peuvent être partagées avec les autres modules photovoltaïques de la rangée à laquelle il appartient, comme représenté sur la figure 3. Les poutres porteuses 22 sont donc de la longueur de la rangée de modules photovoltaïques 2, et le reste de la structure porteuse 21 des modules photovoltaïques 2 peut être assemblé sur les poutres porteuses 22 communes entre les modules. Notamment, comme représenté sur la figure 3, les pieds 23 supportant les panneaux photovoltaïques 20 des modules sont assemblés aux poutres porteuses communes à la rangée de modules photovoltaïques. De cette façon, les extrémités opposées du réflecteur 3 assemblées aux poutres porteuses 22 de la structure porteuse 21 des premier 2a et deuxième 2b modules photovoltaïques sont assemblées sur les poutres porteuses 22 des première et deuxième rangées de modules photovoltaïques. Notamment, les extrémités opposées du réflecteur 3 assemblées à la structure porteuse 21 des premier 2a et deuxième 2b modules photovoltaïques peuvent être assemblées sur la longueur des poutres porteuses 22 des deux rangées de modules photovoltaïques comme représenté sur la figure 3 de sorte que le réflecteur 3 s'étend sur la longueur de ces rangées.

Par ailleurs, dans des exemples où la structure porteuse 21 d'un module photovoltaïque comprend un support de panneau 25 présentant une barre horizontale s'étendant perpendiculairement à l'axe d'orientation des modules, cette barre horizontale peut être partagée avec les modules de la rangée de modules photovoltaïques à laquelle il appartient. De cette façon, la barre horizontale du support de panneau 25 peut supporter plusieurs panneaux photovoltaïques adjacents de la rangée de modules.

Les exemples d'installations photovoltaïques présentés par la présente divulgation permettent donc d'augmenter le productible photovoltaïque des installations selon l'art antérieur en disposant avec astuce les réflecteurs permettant de refléter le rayonnement solaire sur les panneaux photovoltaïques de l'installation entre deux modules alignés ou entre deux rangées de modules. Par ailleurs, dans des exemples, les caractéristiques de ces réflecteurs sont telles qu'ils sont adaptés pour supporter le poids d'une personne, permettant à ce titre d'utiliser ces réflecteurs comme chemin de circulation entre deux modules alignés et éventuellement entre deux rangées de modules, notamment pour permettre leur entretien et leur maintenance. Dans ces exemples, le réflecteur a donc une double fonction, sa fonction première qui est celle de réfléchir le rayonnement solaire pour permettre d'augmenter la génération de productible électrique par l'installation photovoltaïque et une deuxième fonction qui est celle de créer un chemin de circulation praticable pour permettre l'entretien et la maintenance de l'installation photovoltaïque par les opérateurs.

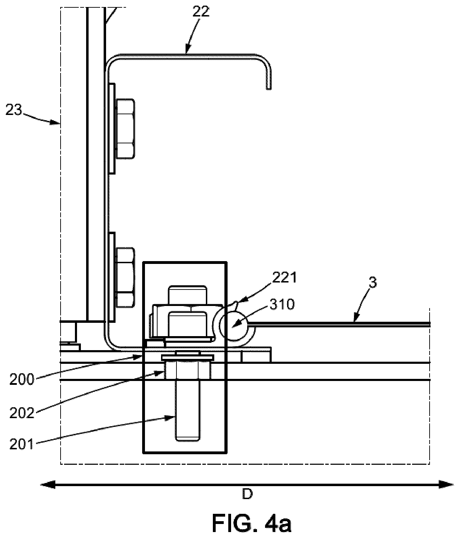

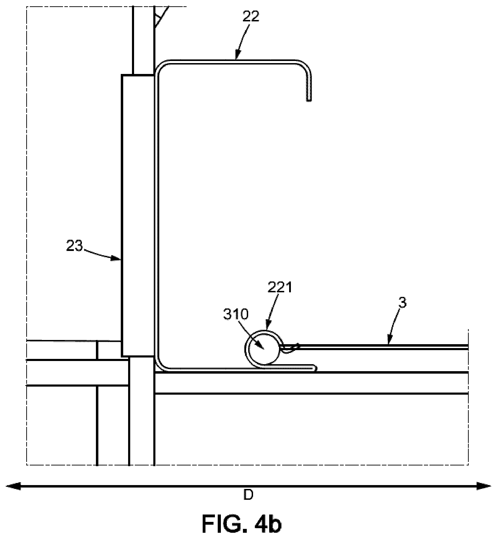

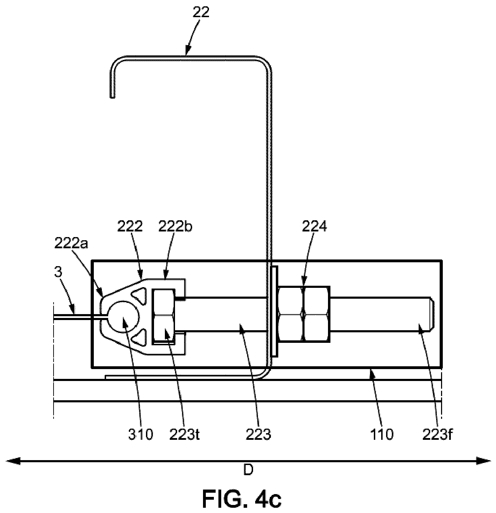

Il est désormais présenté en référence aux figures 4a, 4b et 4c trois exemples de système d'assemblage d'une extrémité d'une bâche réfléchissante 3 à la structure porteuse 21 d'un module photovoltaïque 2 dans des modes de réalisation dans lesquels la structure porteuse 21 du module comprend les poutres porteuses 22. Les figures 4a, 4b et 4c représentent une vue de côté d'un module 2 au niveau de la poutre porteuse 22 sur laquelle est assemblée une extrémité de la bâche réfléchissante 3. L'exemple de système d'assemblage 100 présenté peut également être utilisé pour assembler une extrémité d'une bâche réfléchissante 3 à une poutre porteuse 22 d'une structure porteuse 21 partagée entre des modules 2 d'une rangée de modules 2.

Dans les exemples des figures 4a et 4b, le système d'assemblage peut comprendre un profilé 221 adapté pour coopérer avec une extrémité 31 de la bâche réfléchissante 3 de façon à assembler le profilé 221 et l'extrémité 31 de la bâche réfléchissante 3 ensemble. L'extrémité 31 de la bâche réfléchissante peut par exemple comprendre un jonc 310 s'étirant sur une longueur de la bâche réfléchissante perpendiculaire à l'axe d'orientation des modules, et présentant une longueur adaptée à la poutre porteuse 22 sur laquelle il va être assemblé. Le profilé 221 peut être conformé selon une forme et une longueur complémentaire à celle du jonc 310 de façon à ce que le jonc 310 puisse être reçu et maintenu dans le profilé 221.

Dans l'exemple de la figure 4a, le profilé 221 est assemblé à la poutre porteuse 22 du module photovoltaïque 2 par un système de fixation 200, par exemple à l'aide d'une vis ou d'un rivet. Plus précisément, dans l'exemple illustré, le système de fixation 200 comprend une vis 201 coopérant avec un écrou de fixation 202. La vis 201 traverse une section du profilé 221 et une section de la poutre porteuse 22 avant de traverser l'écrou de fixation 202 de façon à permettre l'assemblage du profilé 221 à la poutre porteuse 22. Dès lors, lorsque le jonc 310 de la bâche réfléchissante 3 est reçu dans le profilé 221, il est assemblé avec la poutre porteuse 22 du module 2 sur laquelle est assemblé le profilé 221.

Dans l'exemple de la figure 4b, le profilé 221 est directement formé sur la poutre porteuse 22 et forme une partie intégrante de la poutre porteuse. La poutre porteuse 22 est donc conformée pour présenter le profilé 221. Ainsi, lorsque le jonc 310 de la bâche réfléchissante 3 est reçu dans le profilé, il n'est plus nécessaire d'utiliser un système de fixation assemblant le profilé 221 à la poutre porteuse 22.

On comprend que dans ces configurations, le profilé 221, qu'il soit assemblé sur la poutre porteuse 22 du module 2 comme illustré en figure 4a, ou qu'il soit partie intégrante de la poutre porteuse 22 du module 2 comme illustré en figure 4b, s'étend sur la longueur de la poutre porteuse 22 du module. Par conséquent, dans le cas d'une rangée de modules photovoltaïques présentant une structure porteuse 21 avec des poutres porteuses 22 partagées entre les modules 2 de la même rangée, le profilé 221 peut s'étendre sur la longueur d'une poutre porteuse 22 de la rangée de module, et la longueur de la bâche réfléchissante perpendiculaire à l'orientation des modules peut être adaptée à la longueur de ce profilé 221 pour assembler l'extrémité 31 de la bâche réfléchissante 3à la rangée de modules.

On comprend également que l'exemple de système d'assemblage des figures 4a ou 4b utilisant la coopération d'un jonc 310 et d'un profilé 221 peut être utilisé pour assembler chacune des extrémités de la bâche réfléchissante 3 sur leur poutre porteuse 22 respective, que ces poutres porteuses 22 soient celles des deux modules photovoltaïques 2a et 2b ou celles partagées par les modules photovoltaïques 2 de deux rangées de modules photovoltaïques 2.

L'exemple de système d'assemblage jonc/profilé présenté est avantageux dans la mesure où il est peu coûteux et qu'il permet un assemblage facilité par rapport à des systèmes présentant plusieurs points d'accroches différents, notamment à l'aide d'œillets, entre la bâche réfléchissante et la poutre porteuse.

Dans l'exemple de la figure 4c, le système d'assemblage comprend un système de tension 110 et l'extrémité 31 de la bâche réfléchissante comprend également un jonc 310 s'étirant sur la longueur de la bâche réfléchissante 3 perpendiculaire à l'axe d'orientation des modules. Le jonc 310 est assemblé à la poutre porteuse 22 par le système de tension 110. Le système de tension 110 est adapté pour tendre la bâche réfléchissante, par exemple en rapprochant le jonc 310 de la poutre porteuse 22 selon l'axe d'orientation du module.

Dans l'exemple représenté, le système de tension 110 comprend un profilé 222 conformé pour accueillir le jonc 310 à une première extrémité 222a et conformé pour accueillir une tête de vis 223t à une deuxième extrémité 222b opposée à la première extrémité. La deuxième extrémité 222b du profilé 222 est conformée de façon à empêcher une rotation de la tête de vis 223t dans le profilé 222. La vis 223 présentant la tête de vis 223t s'étend en longueur le long de l'axe d'orientation du module 2 et traverse la poutre porteuse 22, comme représenté sur la figure 4c, de façon à connecter le profilé 222 à la poutre porteuse 22. Dans cette mesure, lorsque le jonc 310 du réflecteur 3 est engagé dans la première extrémité 222a du profilé 222 du système de tension 110, il est assemblé à la poutre porteuse 22. Le système de tension 110 comprend également un écrou 224 en contact avec la poutre porteuse 22 et permettant de fixer la vis 223 à la poutre porteuse. En l'occurrence, l'extrémité 223f de la vis 223 opposée à la tête de vis 223t depuis laquelle s'étend le filetage (non représenté) de la vis 223 est engagée dans l'écrou 224. De cette façon, en entrainant en rotation l'écrou 224 vers la tête de vis 223t, l'écrou 224 vient en appui sur la poutre porteuse 22 qui se rapproche du profilé 222 et qui se rapproche donc du jonc 310 de la bâche 3 maintenu dans ce profilé 222. Dans la mesure où la distance déterminée entre les poutres porteuses 22 sur lesquelles sont assemblées respectivement les deux extrémités de la bâche 3 est constante, rapprocher une poutre porteuse 22 du jonc 310 de la bâche entraine une tension de la bâche 3. La tension de la bâche peut donc être accrue jusqu'à ce que la poutre porteuse 22, poussée par l'écrou 224 lorsqu'il est entrainé en rotation, vienne en butée contre la tête de vis 223t.

De la même façon que précédemment, on comprend que l'exemple de système d'assemblage présentant un système de tension 110, notamment celui de la figure 4c peut être utilisé pour assembler chacune des extrémités de la bâche réfléchissante 3 sur leur poutre porteuse 22 respective, que ces poutres porteuses 22 soient celles des deux modules photovoltaïques 2a et 2b ou celles partagées par les modules photovoltaïques 2 de deux rangées de modules photovoltaïques 2.

## Revendications

1. Installation photovoltaïque (1) apte à flotter permettant la production d'électricité comprenant un premier module photovoltaïque (2a), un deuxième module photovoltaïque (2b), un réflecteur (3) et un dispositif de flottaison (4) apte à faire flotter l'installation photovoltaïque (1), dans laquelle :
- chaque module photovoltaïque (2) comprend un panneau photovoltaïque (20) et une structure porteuse (21), distincte du dispositif de flottaison (4) et adaptée pour porter le panneau photovoltaïque (20) ;
- les deux modules photovoltaïques (2) sont orientés selon un même axe (D) et sont alignés, selon cet axe (D), en étant séparés d'une distance déterminée, ladite distance étant adaptée pour permettre la circulation d'un individu entre les modules (2) ; et
- le réflecteur (3) comprend deux extrémités (31) opposées respectivement assemblées à la structure porteuse (21) du premier module photovoltaïque (2a) et à la structure porteuse (21) du deuxième module photovoltaïque (2b), et
dans laquelle le réflecteur (3) est une bâche réfléchissante.

2. Installation photovoltaïque selon la revendication 1, dans laquelle :
- le panneau photovoltaïque (20) d'un module (2) est un panneau photovoltaïque monofacial comportant une face supérieure adaptée pour générer de l'électricité par effet photovoltaïque ; ou
- le panneau photovoltaïque (20) d'un module (2) est un panneau photovoltaïque bifacial comportant une face supérieure et une face inférieure adaptées pour générer de l'électricité par effet photovoltaïque.

3. Installation photovoltaïque selon l'une quelconque des revendications précédentes, dans laquelle le réflecteur (3) est en outre adapté pour supporter le poids d'au moins une personne circulant sur le réflecteur entre les deux modules photovoltaïques (2).

4. Installation photovoltaïque selon l'une quelconque des revendications précédentes, dans lequel une extrémité (31) du réflecteur (3) assemblée à la structure porteuse (21) d'un module photovoltaïque (2) est disposée de sorte qu'une section du réflecteur (3) s'étend sous le panneau photovoltaïque (20) du module photovoltaïque (2) sur au moins 10% de la longueur du panneau selon l'axe d'orientation (D).

5. Installation photovoltaïque selon l'une quelconque des revendications précédentes, dans laquelle la structure porteuse (21) des modules photovoltaïques (2) est adaptée pour surélever le panneau photovoltaïque (20) par rapport au réflecteur (3).

6. Installation photovoltaïque selon l'une quelconque des revendications précédentes, dans laquelle les structures porteuses (21) du premier (2a) et du deuxième (2b) modules photovoltaïques (2) comprennent deux poutres porteuses (22) s'étendant perpendiculairement à l'axe d'orientation (D) des modules photovoltaïques (2) ; et
une extrémité (31) du réflecteur (3) est assemblée à une poutre porteuse (22) du premier module (2a) la plus proche du deuxième module (2b) et l'autre extrémité (31) du réflecteur (3) est assemblée à la poutre (22) porteuse du deuxième module (2b) la plus proche du premier module (2a).

7. Installation photovoltaïque selon la revendication précédente, dans laquelle une poutre porteuse (22) d'un module photovoltaïque (2) sur laquelle est assemblée une extrémité (31) d'un réflecteur (3) est disposée en retrait par rapport à un bord du panneau photovoltaïque (20) s'étendant perpendiculairement à l'axe d'orientation (D) du module (2), de sorte qu'une section du réflecteur (3) s'étende sous le panneau photovoltaïque (20) selon cet axe d'orientation (D).

8. Installation photovoltaïque flottante selon la revendication précédente, dans laquelle la structure porteuse (21) d'un module photovoltaïque (2) comprend deux pieds (23) et un support de panneau (24) ;
chaque pied (23) présentant une extrémité inférieure assemblée à une poutre porteuse (22) respective et une extrémité supérieure assemblée au support de panneau (24) ; et
le panneau photovoltaïque (20) est assemblé sur le support de panneau (24).

9. Installation photovoltaïque selon l'une quelconque des revendications 6 à 8, dans laquelle :
- une extrémité (31) de la bâche réfléchissante comprend un jonc (310) s'étirant sur la longueur de la bâche réfléchissante perpendiculaire à l'axe d'orientation (D) des modules (2) ; et
- un profilé (221) conformé selon une forme complémentaire à celle du jonc (310) s'étend sur une poutre porteuse (22) spécifique d'un module (2) sur laquelle est assemblée une extrémité (31) de la bâche réfléchissante de façon à ce que le jonc (310) soit reçu dans le profilé (221) et que l'extrémité (31) de la bâche réfléchissante soit maintenue assemblée à la poutre porteuse spécifique (22).

10. Installation photovoltaïque selon la revendication précédente, dans laquelle :
- le profilé (221) est formé sur la poutre porteuse (22) spécifique et constitue donc une partie intégrante de la poutre porteuse (22) spécifique ; ou
- le profilé (221) est assemblé à la poutre porteuse (22) spécifique par un système de fixation (200).

11. Installation photovoltaïque selon l'une quelconque des revendications 6 à 8, dans laquelle :
- une extrémité (31) de la bâche réfléchissante comprend un jonc (310) s'étirant sur la longueur de la bâche réfléchissante perpendiculaire à l'axe d'orientation (D) des modules (2) ; et
- le jonc (310) est assemblé à une poutre porteuse (22) d'un module (2) sur laquelle est assemblée une extrémité (31) de la bâche réfléchissante par un système de tension (110) adapté pour tendre la bâche réfléchissante.

12. Installation photovoltaïque selon l'une quelconque des revendications précédentes, comprenant deux rangées de modules photovoltaïques, dans laquelle :
- une première rangée de modules photovoltaïques comprend le premier module photovoltaïque (2a) et s'étend sensiblement perpendiculairement à l'axe d'orientation (D) des premier (2a) et deuxième (2b) modules photovoltaïques ;
- une deuxième rangée de modules photovoltaïques comprend le deuxième module photovoltaïque (2b) et s'étend sensiblement perpendiculairement à l'axe d'orientation (D) des premier (2a) et deuxième (2b) modules photovoltaïques ; et
les extrémités (31) opposées du réflecteur (3) étant assemblée de sorte que le réflecteur (3) s'étend entre les deux rangées de modules photovoltaïques.

13. Installation photovoltaïque selon l'une quelconque des revendications précédentes, dans laquelle le réflecteur (3) est configuré pour éviter un stockage de l'eau.
